Europäisches Patentamt

European Patent Office

Office européen des brevets

(19)

(11) **EP 0 830 694 B1**

(12) **EUROPÄISCHE PATENTSCHRIFT**

(45) Veröffentlichungstag und Bekanntmachung des Hinweises auf die Patenterteilung:
**04.12.2002 Patentblatt 2002/49**

(21) Anmeldenummer: **96919569.2**

(22) Anmeldetag: **22.05.1996**

(51) Int Cl.7: **H01B 12/08**

(86) Internationale Anmeldenummer:
**PCT/DE96/00898**

(87) Internationale Veröffentlichungsnummer:
**WO 96/039706 (12.12.1996 Gazette 1996/54)**

(54) **WECHSELSTROMKABEL MIT ZWEI KONZENTRISCHEN LEITERANORDNUNGEN AUS VERSEILTEN EINZELLEITERN**

A.C. CABLE WITH TWO CONCENTRIC CONDUCTOR CONFIGURATIONS OF STRANDED SINGLE CONDUCTORS

CABLE C.A. AVEC DEUX CONFIGURATIONS DE CONDUCTEURS CONCENTRIQUES SOUS FORME DE CONDUCTEURS SEULS TORONNES

(84) Benannte Vertragsstaaten:
**DE FR GB IT**

(30) Priorität: **06.06.1995 DE 19520587**

(43) Veröffentlichungstag der Anmeldung:
**25.03.1998 Patentblatt 1998/13**

(73) Patentinhaber: **PIRELLI CAVI E SISTEMI S.p.A.**
**20126 Milano (IT)**

(72) Erfinder: **RIES, Günter**
**D-91058 Erlangen (DE)**

(74) Vertreter: **Koch, Thomas, Dr. et al**
**Hoffmann - Eitle**
**Patent- und Rechtsanwälte**
**Arabellastrasse 4**
**81925 München (DE)**

(56) Entgegenhaltungen:
**FR-A- 2 217 837**      **GB-A- 2 106 308**
**US-A- 3 163 836**

**Beschreibung**

Die Erfindung bezieht sich auf ein Wechselstromkabel mit mindestens einer Kabelader, die als Wechselstromhin- und -rückleiter zwei konzentrische Leiteranordnungen aus verseilten Einzelleitern aufweist, wobei wenigstens eine der Leiteranordnungen aus mehreren Leiterlagen der wendelförmig um einen Trägerkörper mit vorbestimmten Verseilwinkeln gelegten Einzelleiter gebildet ist. Ein derartiges Kabel ist z.B. der DE 38 11 051 C zu entnehmen.

Die Entwicklung von Wechselstromkabeln mit elektrischen Leitern, die supraleitende Metalloxidverbindungen als Leitermaterial enthalten, ist gegenwärtig von besonderem Interesse. Solche supraleitende Metalloxidverbindungen mit hohen Sprungtemperaturen $T_c$ von vorzugsweise über 77 K, die deshalb mit flüssigem Stickstoff bei Normaldruck gekühlt werden können, sind allgemein bekannt. Diese Verbindungen werden deshalb auch als Hoch-$T_c$- oder Hochtemperatur-Supraleitermaterialien (Abkürzung: HTSL-Materialien) bezeichnet. Entsprechende Metalloxidverbindungen sind insbesondere Cuprate, beispielsweise auf Basis des Stoffsystems Y-Ba-Cu-O oder (Bi,Pb)-Sr-Ca-Cu-O.

Aus diesen HTSL-Materialien lassen sich Leiter herstellen, mit denen die supraleitenden Kabeladern von Wechselstromkabeln zur Übertragung von elektrischer Energie mit geringen Verlusten und mit kleinen Querschnitten aufgebaut werden können. Gegenüber bekannten normalleitenden Kabeln sind so wirtschaftliche Vorteile zu erzielen, sofern die Wechselfeldverluste einschließlich eines Energieaufwandes in einer Kühlanlage zu ihrer Abführung kleiner als die Verluste in einem vergleichbaren normalleitenden Kabel sind.

Abschätzungen und Verlustmessungen an Kabelmodellen lassen erwarten, daß dieses Ziel nicht ohne weiteres erreicht werden kann, falls für das vorgesehene Stromtragvermögen Kabeladern mit mehreren Lagen von z.B. bandförmigen HTSL-Elementarleitern benötigt werden. Als Ursache hierfür wurden die verlustbehaftete Flußbewegung des magnetischen Eigenfeldes in und aus dem Supraleiter sowie induzierte Wirbelströme in metallischen Leiterkomponenten erkannt.

Nach einer bekannten, durch Experimente gestützten Verlusttheorie muß das Magnetfeld an der Leiteroberfläche eines Supraleiters möglichst klein gewählt werden. Auf ein Wechselstromkabel angewandt heißt dies aber, daß dann der Durchmesser der Kabeladern so groß zu machen ist, bis der Strom von einer einlagigen Belegung mit einzelnen Supraleitern getragen werden kann. Dies führt aber zu Problemen wie hinsichtlich

- einer geringen Biegbarkeit bzw. großen zulässigen Radien bei Fertigung, Transport und Verlegung,
- eines hohen Volumens an elektrischer Isolation, großer dielektrischer Verluste und großer Kapazität,
- großer Oberfläche einer kryogenen Hülle und erheblicher Wärmeeinströmung in ein Kühlmittel.

Maßnahmen zur Lösung dieser Probleme sind bisher jedoch nicht bekannt.

Aufgabe der vorliegenden Erfindung ist es deshalb, das Wechselstromkabel mit den eingangs genannten Merkmalen dahingehend auszugestalten, daß die genannten Probleme, insbesondere bei einer Verwendung von Supraleitermaterial, zumindest großenteils nicht auftreten. Ein erfindungsgemäßes Wechselstromkabel soll auch für normalleitende Leiter auszulegen sein.

Diese Aufgabe wird erfindungsgemäß mit den im Hauptanspruch angegebenen Maßnahmen gelöst.

Bei der Erfindung wird von der Tatsache ausgegangen, daß bei einer Kabelader mit nur einer einzigen Lage aus mit einem Verseilwinkel $\alpha$ verseilten Leitern der Strom I Spiralbahnen folgt und neben einer Axialkomponente $I_z = I \cos\alpha$ entlang der Kabeladerachse (in z-Richtung) auch eine azimutale Komponente $I_\varphi = I \sin\alpha$ in Umfangsrichtung hat. Eine Einzellage mit Strombelag J erzeugt also zwei Komponenten des Magnetfeldes:

- Im Außenraum um die Leiterlage (mit Radius r > R) ist das Feld rein anzimutal:

$$H_\varphi = J_z R/r = J \cos\alpha \ R/r.$$

- In dem von der Leiterlage umschlossenen Innenraum (mit Radius r < R) ist das Feld homogen und entlang der Kabelachse z gerichtet:

$$H_z = J_\varphi = J \sin\alpha.$$

Dabei sind

$\alpha$ der Verseilwinkel zwischen dem einzelnen Supraleiter und der Kabelachse (in z-Richtung),
R der Radius der einzigen Leiterlage,
$J = I/(2\pi R \cos\alpha)$ der Strombelag auf der Leiteroberfläche (= der Strom in einem bandförmigen Einzelleiter pro Bandbreite).

In einer derartigen einlagigen Kabelader werden die Wechselfeldverluste durch die Feldkomponente an der äußeren Oberfläche

$$H_\varphi(R) = J_z = I/(2\pi R)$$

verursacht. Demgegenüber muß bei mehrlagig verseilten Kabeladern die Überlagerung der Feldbeträge der einzelnen Leiterlagen berücksichtigt werden. Hier hat das Summenfeld außen wieder nur eine $\varphi$-Komponente und innen nur eine z-Komponente. In den Zwischenräumen zwischen benachbarten Leiterlagen sind jedoch beide Feldkomponenten vorhanden.

Es wurde nun erkannt, daß sich die auf diese beiden Feldkomponenten in den Zwischenräumen zurückzuführenden Wechselfeldverluste mit dem erfindungsgemäßen Verseilkonzept für die mehrlagige Kabelader des Wechselstromkabels zumindest weitgehend verhindern lassen, indem nunmehr kein magnetischer Fluß über den Leiter von außen in die zwischen den einzelnen Lagen vorhandenen Zwischenräume wandert. Dadurch entfallen vorteilhaft auch die damit verbundenen, verhältnismäßig hohen Verluste. Diese Überlegungen gelten sowohl für supraleitende Leiter, insbesondere mit HTSL-Material, als auch für normalleitende Leiter. Sie führen z.B. dazu, daß bei einem erfindungsgemäßen Kabel in jeder Leiteranordnung, die wenigstens drei Leiterlagen aufweist, jeweils die Verseilwinkel der Einzelleiter stufenweise immer nur zunehmen oder nur abnehmen (ohne daß ein Vorzeichenwechsel in der Änderungsgröße auftritt). Bekannte Kabelkonzepte sehen hingegen Änderungen der Verseilwinkel mit Vorzeichenwechsel vor (vgl. z.B. DE-OS 1 814 036 oder EP 0 623 937 A).

Vorteilhafte Ausgestaltungen des erfindungsgemäßen Wechselstromkabels gehen aus den abhängigen Ansprüchen hervor.

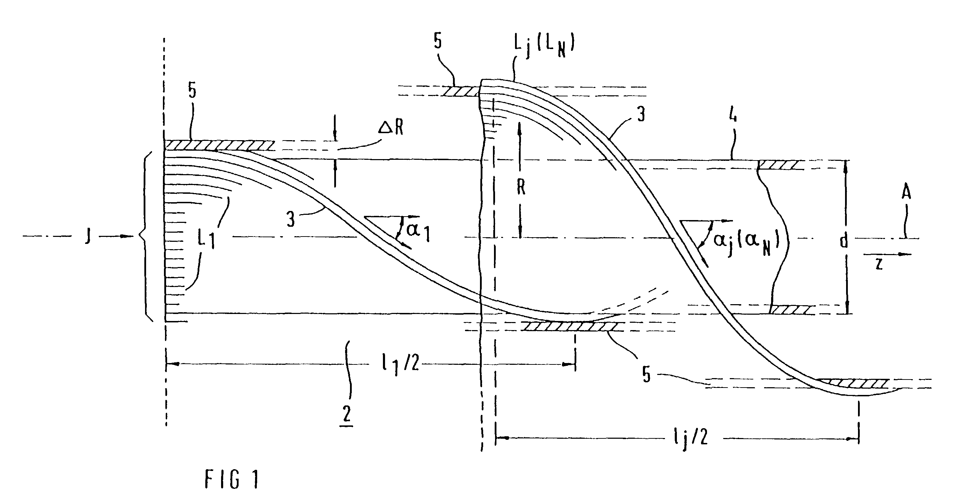

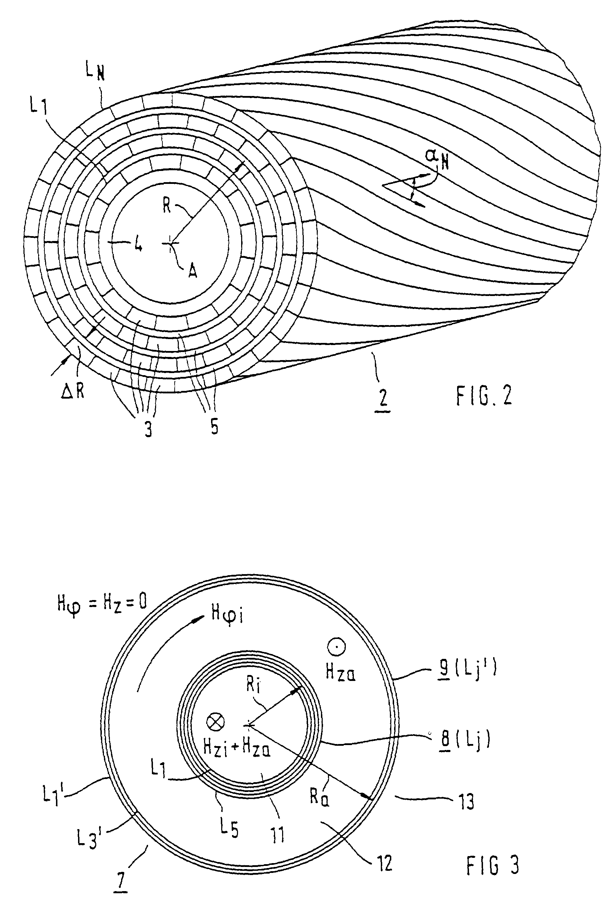

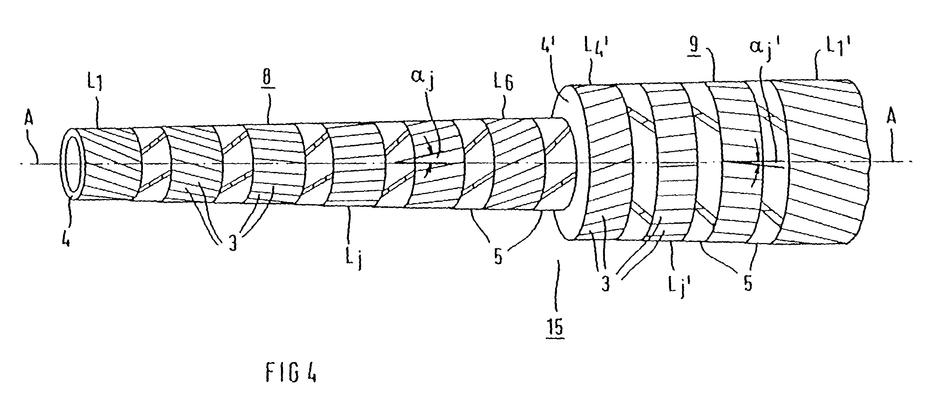

Zur weiteren Erläuterung der Erfindung wird nachfolgend auf die Zeichnung Bezug genommen. Dabei zeigen jeweils schematisch

deren Figuren 1 und 2 einen Ausschnitt aus der Verseilung einer einzigen Leiteranordnung,
deren Figur 3 einen Querschnitt durch ein erfindungsgemäßes Kabel mit konzentrischer Hin- und Rückleiteranordnung und
deren Figur 4 eine Schrägansicht dieses Kabels.

Dabei sind in den Figuren sich entsprechende Teile mit denselben Bezugszeichen versehen.

In den Figuren 1 und 2 ist als Teil eines erfindungsgemäßen Wechselstromkabels nur eine Leiteranordnung 2 einer Kabelader angedeutet. Diese Leiteranordnung enthält eine erste Lage $L_1$ von einzelnen nebeneinanderliegenden Einzelleitern 3 auf einem vorzugsweise voll- oder hohlzylindrischen, eine Längsachse A umschließenden Trägerkörper 4. Die Achse A weist in Richtung einer z-Koordinate. Als Leitermaterial sei für das Ausführungsbeispiel ein Supraleitermaterial mit hoher Sprungtemperatur $T_c$ von insbesondere über 77 K gewählt. Die draht- oder bandförmigen Einzelleiter 3 enthalten somit ein HTSL-Material wie beispielsweise $(Bi,Pb)_2Sr_2Ca_2Cu_3O_x$, das in einer normalleitenden Matrix vorzugsweise aus Ag oder einer Ag-Legierung eingebettet sein kann. Das HTSL-Material kann auch in Form einer Schicht auf einem normalleitenden Träger aufgebracht sein. Die supraleitenden Einzelleiter können als Einkernleiter oder Mehrkernleiter (= Multifilamentleiter) ausgebildet sein, wobei sie eine runde oder vorzugsweise eine flache Querschnittsform besitzen. Beispielsweise kann ein HTSL-Multifilament-Flachdraht mit mindestens 19 Filamenten von etwa elliptischem Querschnitt in einer Matrix aus Silber vorgesehen sein. Ein Ag-haltiges Matrixmaterial kann auch legiert sein mit 0,1 bis 4 % Wismut, Blei, Antimon, Aluminium oder Zinn, wobei es einen spezifischen elektrischen Widerstand von wenigstens $10^{-6}$ $\Omega \cdot$cm bei 77 K aufweisen soll. Ein entsprechender Mehrkernleiter kann verdrillte Leiterkerne (Filamente) mit einer "Twist"-Länge zwischen 1 und 10 cm aufweisen. Bei bandförmigen Supraleitern liegt das Verhältnis von Breite zu Dicke vorzugsweise zwischen 10:1 und 50:1.

In der radial innersten Leiterlage $L_1$ aus einer Vielzahl von nebeneinander verlaufenden, entsprechenden supraleitenden Ein- oder Mehrkernleitern 3 sollen diese Leiter jeweils mit einer vorbestimmten Verseilschlaglänge $l_1$ schrauben- oder wendelförmig angeordnet sein. In Abhängigkeit vom Durchmesser d des Trägerkörpers 4 ergibt sich dann zwischen der Längsrichtung jedes Supraleiters 3 und der Längsrichtung (Achsrichtung z) des Trägerkörpers 4 ein vorbestimmter Verseilwinkel $\alpha_1$.

Um die Lage $L_1$ ist mindestens eine weitere, in den Figuren nur angedeutete Lage $L_j$ aus supraleitenden Einzelleitern 3 angeordnet, die vorteilhaft denen der Lage $L_1$ entsprechen. (Für den Index j gilt somit: $1 \leq j \leq N$ mit $N \geq 2$). Dabei kann eine dünne elektrische Isolation 5 zwischen benachbarten Leiterlagen vorgesehen sein. Es ist jedoch auch möglich, daß zwischen diesen Lagen eine dünne elektrisch leitfähige Schicht vorgesehen wird. Diese Schicht kann aus einem schlecht-leitfähigen Material, beispielsweise aus einem Kohlepapier, mit einem Flächenwiderstand

zwischen $10^{-2}$ und $10^{-6}$ $\Omega \cdot cm^2$ bestehen. Erfindungsgemäß sollen für die Einzelleiter 3 der weiteren Lage $L_j$ eine vorbestimmte Verseilschlaglänge $l_j$ und somit ein davon abhängiger Verseilwinkel $\alpha_j$ vorgesehen werden. Die konkreten Werte für die Verseilschlaglängen $l_1$ und $l_j$ bzw. für die Verseilwinkel $\alpha_1$ und $\alpha_j$ werden dabei erfindungsgemäß so gewählt, daß sich der Transportstrom des gesamten Wechselstromkabels unter Berücksichtigung der gegenseitigen Beeinflussung der als Hin- und Rückleiter dienenden Leiteranordnungen Kabels zumindest annähernd gleichmäßig auf alle Leiterlagen $L_j$ verteilt. D.h., in der dargestellten Leiteranordnung 2 mit N ($\geq$ 2) Lagen $L_j$ von Einzelleitern 3 soll jede dieser Lagen einen zumindest weitgehend gleichen Strombelag $J_j$ = J aufweisen. Unter dem Strombelag $J_j$ der j-ten Leiterlage $L_j$ wird dabei der Gesamtstrom, bezogen auf den Umfang der jeweiligen Leiterlage $L_j$ und den Cosinus des Verseilwinkels $\alpha_j$ der Leiter in dieser Lage verstanden. D.h., es gilt:

$$J_j = I_{ges}/(2\pi r_j \cdot N \cdot \cos\alpha_j)$$

mit $I_{ges}$ = Gesamtstrom in der gesamten Kabelader,

$$r_j = \text{mittlerer Radius der Leiterlage } L_j.$$

Zur Bestimmung der konkreten Werte für $\alpha_j$ sei zunächst nur ein Kabel bzw. eine Kabelader mit der in den Figuren 1 und 2 angedeuteten nur einen Leiteranordnung 2 betrachtet, bei dem ein Stromfluß nur in einer Richtung z (z.B. in Hinrichtung) erfolgt. Für ein derartiges Kabel müssen die Verseilschlaglängen $l_j$ bzw. die Verseilwinkel $\alpha_j$ der einzelnen Leiterlagen $L_j$ zumindest annähernd die folgende mathematische Beziehung erfüllen:

$$\frac{2\pi R}{l_{j+1}} - \frac{2\pi R}{l_j} = \tan\alpha_{j+1} - \tan\alpha_j = \frac{2\Delta R \sum_{k=1}^{j} \cos\alpha_k}{R \cdot (H_z / J)} \quad ,$$

wobei

$$H_z / J = \sum_{k=1}^{N} \sin\alpha_k \quad .$$

Dabei sind

R     der mittlere Radius der Gesamtheit aller Leiterlagen $L_j$,
$H_z/J$     das Axialfeld $H_z$ im Inneren der Leiteranordnung 2 pro Strombelag J = $J_j$,
$\Delta R$     der radiale Abstand zwischen den einzelnen Leiterlagen. Dieser Abstand entspricht der Dicke der Einzelleiter 3 plus der Dicke einer eventuell vorhandenen Lagenisolation 5,
j     der Index der jeweiligen Leiterlage $L_j$ (mit 1 $\leq$ j $\leq$ N),
N     die Gesamtzahl aller Leiterlagen der Leiteranordnung.

Da im Nenner der vorstehenden Rekursivformel die Größe $H_z/J$ schon alle gesuchten Winkel $\alpha_j$ enthält, kann die vorstehende Gleichung iterativ gelöst werden. Für jeden vorgegebenen Wert $H_z/J$ (in Achsrichtung z) wird so jeweils ein Satz von Winkeln {$\alpha_j$} erhalten. Dabei ist festzustellen, daß die Verseilwinkel $\alpha_j$ radial von innen nach außen betrachtet stufenweise von Lage zu Lage entweder nur zunehmen oder nur abnehmen. Genau dies ist bei den bekannten Kabelkonzepten nicht der Fall (vgl.z.B. DE-OS 1 814 036 oder EP 0 623 937 A).

Bei der den Figuren 1 und 2 zugrundegelegten Ausführungsform eines Kabels wurde davon ausgegangen, daß dessen einzige Leiteranordnung 2 einen Wechselstrom nur in einer Richtung ihrer Achse A führen soll, so daß sie beispielsweise nur einen Hinleiter darstellt. Für ein erfindungsgemäßes Wechselstromkabel ist folglich noch eine weitere entsprechende Leiteranordnung als Rückleiter erforderlich. In Wechselstromkabeln, insbesondere für eine Drehstromübertragung, sind im allgemeinen nach außen elektrisch und magnetisch neutrale Kabeladern wünschenswert. Man führt deshalb den Strom jeder Phase auf einem konzentrischen Außenleiter zurück (oder umgekehrt). Dann ist außerhalb jeder Kabelader kein Feld vorhanden. In einem Supraleiterkabel mit Hin- und Rückleiter ist ein entsprechendes Konzept unverzichtbar; andernfalls würden Streufelder der parallelliegenden Phasenleiter zusätzliche Ausgleichströme zwischen den Einzelleitern des Leiterseils induzieren. Die dann unvermeidbaren Wechselfeldkomponenten senkrecht zu den supraleitenden Einzelleitern wurden unvertretbar hohe Verluste verursachen. Außerdem entstünden zusätzliche Wirbelstromverluste in einer kryogenen Umhüllung aus metallischem Material.

Figur 3 zeigt schematisch den Querschnitt durch eine entsprechende Kabelader 7 eines erfindungsgemäßen Wechselstromkabels. Sie enthält eine beispielsweise als Hinleiter dienende Innenleiteranordnung 8 mit einem mittleren Radius $R_i$ des Wickels aus ihren Leiterlagen $L_j$ und konzentrisch dazu eine Außenleiteranordnung 9 mit einem mittleren Radius $R_a$ des Wickels aus ihren Leiterlagen $L_{j'}$. Der Strombelag in den Leiterlagen der Außenleiteranordnung soll dabei entgegengesetzt zu dem in den Leiterlagen der Innenleiteranordnung sein, also -J betragen. In der Figur sind fünf Leiterlagen $L_j$ der Innenleiteranordnung 8 sowie drei Leiterlagen $L_{j'}$ der Außenleiteranordnung 9 angedeutet. Die Leiterlagen $L_j$ der Innenleiteranordnung werden dabei radial von innen nach außen gezählt, während die Leiterlagen $L_{j'}$ der Außenleiteranordnung in umgekehrter Richtung gezählt werden. In dem Innenraum 11 der Innenleiteranordnung wirkt die Überlagerung der axialen Felder $H_{zi}$ + $H_{za}$ von Innen- und Außenleiteranordnung, in dem Zwischenraum 12 zwischen Innen- und Außenleiteranordnung nur das axiale Feld $H_{za}$ der Außenleiteranordnung. Auch herrscht dort noch ein von der Innenleiteranordnung erzeugtes azimutales Feld $H_{\varphi i}$. Der Außenraum 13 ist feldfrei

$$(H_\varphi = H_z = 0).$$

Entsprechend der vorstehend angegebenen mathematischen Beziehung für $\tan\alpha_{j+1}$-$\tan\alpha_j$ für eine nur einen Hinleiter bildende Kabelader eines Wechselstromkabels werden vorteilhaft für ein erfindungsgemäßes Wechselstromkabel mit einer Kabelader 7, die konzentrisch eine Innenleiteranordnung 8 und eine Außenleiteranordnung 9 aufweist, die folgenden mathematischen Beziehungen zumindest weitgehend eingehalten

a) für die Innenleiteranordnung 8:

$$\frac{2\pi R_i}{l_{j+1,i}} - \frac{2\pi R_i}{l_{ji}} = \tan\alpha_{j+1,i} - \tan\alpha_{ji}$$

$$= \frac{2\Delta R_i \sum_{k=1}^{j} \cos\alpha_{ki}}{R_i \cdot (H_{zi} / J)}$$

mit

$$H_{zi} / J = \sum_{k=1}^{N_i} \sin\alpha_{ki} - \frac{N_i \dot{R_i}}{N_a R_a} \sum_{k=1}^{N_a} \sin\alpha_{ka}$$

und
b) für die Außenleiteranordnung 9:

$$\frac{2\pi R_a}{l_{j+1,a}} - \frac{2\pi R_a}{l_{ja}} = \tan\alpha_{j+1,a} - \tan\alpha_{ja}$$

$$= \frac{2\Delta R_a \sum_{k=1}^{j} \cos\alpha_{ka}}{R_a (H_{za} / J)}$$

mit

$$H_{za}/J = \frac{N_a R_a R_i^2}{N_i R_i R_a^2} \sum_{k=1}^{N_i} \sin\alpha_{ki} - \sum_{k=1}^{N_a} \sin\alpha_{ka}$$

Die Indizes i und a beziehen sich dabei auf die Innen- bzw. Außenleiteranordnung. Die Summen gehen über die Lagenzahlen der Innenleiteranordnung $N_i$ bzw. der Außenleiteranordnung $N_a$. Im Außenraum 13 heben sich alle Felder zu Null auf. Das azimutale Feld $H_{\varphi a}$ zwischen den einzelnen Lagen $L_j'$ der Außenleiteranordnung 9 nimmt im Gegensatz zur Innenleiteranordnung radial von außen nach innen zu. Diesem Sachverhalt ist durch die Zählordnung nach Figur 3 von außen nach innen Rechnung getragen.

Die vorstehenden mathematischen Beziehungen gelten für alle Wechselstromkabel mit konzentrischer Außen- und Innenleiteranordnung, wobei nur eine der Lagenzahlen $N_i$ und $N_a$ größer als 1 zu sein braucht. So sind diese mathematischen Beziehungen beispielsweise auf ein Wechselstromkabel anwendbar, das eine Innenleiteranordnung mit zwei Leiterlagen und eine Außenleiteranordnung mit nur einer einzigen Leiterlage aufweist. D.h., es muß gelten: $N_i + N_a \geq 3$. Hat z.B. die Außenleiteranordnung nur eine einzige Leiterlage, dann entfällt natürlich die diesbezügliche Dimensionierungsvorschrift für den Verseilwinkel $\alpha_{1a}$. Der konkret zu wählende Winkelwert von $\alpha_{1a}$ muß aber in die Berechnungsvorschrift für die Innenleiteranordnung über die Gleichung für $H_{zi}/J$ eingehen.

Tabelle 1 gibt als konkrete Ausführungsbeispiele einige Sätze von Verseilwinkeln $\alpha_j$ für Innen-/Außenleiteranordnungen mit 6/4 bzw. 3/2-Leiterlagen wieder, die für bestimmte Wertepaare ($H_{zi}/J$ mit $H_{za}/J$) zu erhalten sind. Dabei sind spezielle Größen $2\Delta R_i/R_i$ und $2\Delta R_a/R_a$ zugrundegelegt. Außer diesen wenigen Beispielen können durch Variation der Parameter $H_{zi}/J$ und $H_{za}/J$ weitere Verseilschemata erhalten werden, um den konkreten Erfordernissen eines Verkabelungsvorgangs, der mechanischen Stabilität des Seilverbundes, der Anpassung an thermische Dilatationen beim Abkühlen usw. möglichst gerecht zu werden. Alle diese Variationen sind unter dem Gesichtspunkt der Wechselfeldverluste her als gleichwertig anzusehen.

Tabelle 1

| 6/4 Lagen | | Innenleiter $2\Delta R_i/R_i$=0.033 | | | | | | Außenleiter $2\Delta R_a/R_a$=0.02 | | | |
|---|---|---|---|---|---|---|---|---|---|---|---|
| $H_{zi}/J$ | $H_{za}/J$ | $\alpha_1$ | $\alpha_2$ | $\alpha_3$ | $\alpha_4$ | $\alpha_5$ | $\alpha_6$ | $\alpha_1$ | $\alpha_2$ | $\alpha_3$ | $\alpha_4$ |
| 0.1 | -0.1 | -37 | -32 | -18.5 | 7 | 36 | 57 | -20 | -13 | 2.5 | 25 |
| 0.2 | -0.1 | -28 | -23 | -13 | 5 | 28 | 47 | -16 | -10.5 | 2 | 20 |
| 0.6 | -0.1 | -9 | -7 | -1.3 | 7 | 17 | 29 | -10 | -6.5 | 0.2 | 10 |
| 0.6 | 0.1 | -14 | -10.5 | -3 | 8 | 21.5 | 35 | -17 | -10 | 6 | 28 |
| 3/2 Lagen | | $2\Delta R_i/R_i$=0.04 | | | | | | $2\Delta R_a/R_a$=0.0217 | | | |
| 0.2 | 0 | -10.5 | 0.5 | 22 | | | | -8.5 | 8.5 | | |
| 0.1 | 0 | -24 | -4 | 35 | | | | -16 | 16 | | |
| 0 | 0.2 | 17 | 4.5 | -22 | | | | 9 | 2.7 | | |
| 0.05 | -0.05 | -26 | -6 | 36 | | | | -10 | 7.5 | | |

Figur 4 zeigt eine entsprechend verseilte Kabelader 15 eines erfindungsgemäßen Wechselstromkabels mit Innenleiteranordnung 8 und Außenleiteranordnung 9. Die Innenleiteranordnung weist sechs auf einem Trägerkörper 4 sich konzentrisch umschließende Leiterlagen $L_j$ (j = 1 ...6) auf, die untereinander durch Lagenisolationen 5 beabstandet sind. Ein den Wickel aus den Leiterlagen $L_i$ umschließender weiterer Trägerkörper 4' trägt vier konzentrische, entsprechend beabstandete Leiterlagen $L_j'$ (mit j = 1...4) der Außenleiteranordnung 9. Wie aus der Figur hervorgeht, weisen alle Leiterlagen der Innen- und Außenleiteranordnung jeweils unterschiedliche Verseilwinkel $\alpha_j$ bzw. $\alpha_j'$ auf, wobei unter Berücksichtigung der unterschiedlichen Zählweise für Innen- und Außenleiter jeweils von negativen Winkeln stufenweise zu positiven Winkeln übergegangen wird. Diese Regelmäßigkeit muß jedoch nicht unbedingt immer gegeben sein. Es kann sich auch eine stufenweise Winkeländerung in umgekehrter Richtung ergeben (vgl. Tabelle 1, Ausführungsbeispiel zu 3/2 Leiterlagen). Es ist jedoch festzustellen, daß bei einem erfindungsgemäßen Wechselstromkabel, das mindestens eine Leiteranordnung mit wenigstens drei Leiterlagen aufweist, innerhalb dieser Leiteranordnung die Verseilwinkel stufenweise immer nur zunehmen oder nur abnehmen (ohne Vorzeichenwechsel der Winkeländerung). Genau dieses Merkmal ist bei bekannten Kabelkonzepten nicht gegeben (vgl. z.B. die genannte DE-OS 1 814 036 oder EP 0 623 937 A).

Gemäß den vorstehend erläuterten Ausführungsbeispielen wurde davon ausgegangen, daß es sich bei den elektrischen Leitern der Wechselstromkabel nach der Erfindung um Einzelleiter mit mindestens einer Leiterader aus einem HTSL-Material handeln soll. Die hierfür auszuwählenden Maßnahmen bezüglich der Wahl spezieller Verseilwinkel sind zwar als besonders vorteilhaft für Einzelleiter aus solchen Materialien zu betrachten; die diesen Winkeln zugrundeliegenden Überlegungen gelten jedoch ebenso auch für Einzelleiter mit den sogenannten klassischen Supraleitermaterialien wie NbTi oder $Nb_3Sn$, die eine LHe-Kühltechnik erforderlich machen.

Darüber hinaus sind die erfindungsgemäßen Maßnahmen auch bei Wechselstromkabeln mit normalleitenden Einzelleitern, z.B. aus Cu oder Cu-Legierungen, vorteilhaft anzuwenden. Denn mit diesen Maßnahmen lassen sich in Leitern aus diesen Materialien auftretende Skineffekte berücksichtigen.

**Patentansprüche**

1. Wechselstromkabel mit mindestens einer Kabelader, die als Wechselstromhin- und -rückleiter zwei konzentrische Leiteranordnungen aus verseilten Einzelleitern aufweist, wobei wenigstens eine der Leiteranordnungen aus mehreren Leiterlagen der wendelförmig um einen Trägerkörper mit vorbestimmten Verseilwinkeln gelegten Einzelleiter gebildet ist, **dadurch gekennzeichnet, daß** die Verseilwinkel ($\alpha_j$, $\alpha_j'$) der Einzelleiter (3) in den einzelnen Leiterlagen ($L_j$, $L_j'$) derart gewählt sind, daß

   a) für die innere Leiteranordnung (8) die folgenden mathematischen Beziehungen zumindest weitgehend erfüllt sind:

$$\frac{2\pi R_i}{l_{j+1,i}} - \frac{2\pi R_i}{l_{ji}} = \tan\alpha_{j+1,i} - \tan\alpha_{ji}$$

$$\approx \frac{2\Delta R_i \sum_{k=1}^{j}\cos\alpha_{ki}}{R_i \cdot (H_{zi}/J)}$$

   mit

$$H_{zi}/J = \sum_{k=1}^{N_i}\sin\alpha_{ki} - \frac{N_i R_i}{N_a R_a}\sum_{k=1}^{N_a}\sin\alpha_{ka}$$

   sowie

   b) für die äußere Leiteranordnung (9) die folgenden mathematischen Beziehungen zumindest weitgehend erfüllt sind:

$$\frac{2\pi R_a}{l_{j+1,a}} - \frac{2\pi R_a}{l_{ja}} = \tan\alpha_{j+1,a} - \tan\alpha_{ja}$$

$$\approx \frac{2\Delta R_a \sum_{k=1}^{j}\cos\alpha_{ka}}{R_a(H_{za}/J)}$$

   mit

$$H_{za} \, / \, J = \frac{N_a R_a R_i^{\,2}}{N_i R_i R_a^{\,2}} \sum_{k=1}^{N_i} \sin \alpha_{ki} - \sum_{k=1}^{N_a} \sin \alpha_{ka} \; ,$$

wobei

$l_{ji}$ und $l_{ja}$     die Verseilschlaglängen der Einzelleiter in der j-ten Leiterlage ($L_j$ bzw. $L_j$') der inneren Leiteranordnung (8) bzw. der äußeren Leiteranordnung (9),

$\alpha_{ji}$ und $\alpha_{ja}$     die Verseilwinkel der Einzelleiter in der j-ten Leiterlage ($L_j$ bzw. $L_j$') der inneren Leiteranordnung (8) bzw. der äußeren Leiteranordnung (9);

$N_i$ und $N_a$     die Anzahl der Leiterlagen ($L_j$ bzw. $L_j$') der inneren Leiteranordnung (8) bzw. der äußeren Leiteranordnung (9),

$H_{zi}$ und $H_{za}$     das von der inneren Leiteranordnung (8) bzw. der äußeren Leiteranordnung (9) jeweils im Inneren der Kabelader (7) hervorgerufene Axialfeld,

$J$     der Strombelag in jeder Leiterlage ($L_j$, $L_j$'),

$R_i$ und $R_a$     die mittleren Radien der Gesamtheit aller Leiterlagen ($L_j$ bzw. $L_j$') der inneren Leiteranordnung (8) bzw. der äußeren Leiteranordnung (9) und

$\Delta R_i$ und $\Delta R_a$     die Differenzen zwischen den mittleren Radien benachbarter Leiterlagen ($L_j$ bzw. $L_j$') der inneren Leiteranordnung (8) bzw. der äußeren Leiteranordnung (9)

sind.

**2.** Kabel nach Anspruch 1, **gekennzeichnet durch** Einzelleiter mit supraleitendem Material.

**3.** Kabel nach Anspruch 2, **gekennzeichnet durch** Einzelleiter (3) mit Hoch-$T_c$-Supraleitermaterial.

**4.** Kabel nach Anspruch 3, **dadurch gekennzeichnet, daß** in den Einzelleitern (3) ihr Hoch-$T_c$-Supraleitermaterial in Form mindestens eines Kerns in einer Matrix aus Ag oder einer Ag-Legierung vorliegt.

**5.** Kabel nach Anspruch 1, **gekennzeichnet durch** Einzelleiter mit normalleitendem Material.

**6.** Kabel nach einem der Ansprüche 1 bis 5, **gekennzeichnet durch** Einzelleiter (3) mit Draht- oder Bandform.

**7.** Kabel nach Anspruch 6, **dadurch gekennzeichnet, daß** das Verhältnis von Breite zu Dicke der bandförmigen Einzelleiter (3) zwischen 10:1 und 50:1 liegt.

**8.** Kabel nach einem der Ansprüche 1 bis 7, **dadurch gekennzeichnet, daß** zwischen benachbarten Leiterlagen ($L_j$, $L_j$') eine Schicht (5) aus einem isolierenden oder elektrisch leitfähigen Material angeordnet ist.

**Claims**

**1.** Alternating-current cable with at least one cable core, which has two concentric conductor arrangements composed of twisted individual conductors as an alternating-current forward conductor and return conductor, with at least one of the conductor arrangements being formed from a number of conductor layers of the individual conductors which are laid in a helical shape around a supporting body with predetermined twist angles,
**characterized in that** the twist angles ($\alpha_j$, $\alpha_j$') of the individual conductors (3) in the individual conductor layers ($L_j$, $L_j$') are chosen such that

a) the following mathematical relationships are at least largely satisfied for the inner conductor arrangement (8):

$$\frac{2\pi R_i}{l_{j+1,i}} - \frac{2\pi R_i}{l_{ji}} = \tan\alpha_{j+1,i} - \tan\alpha_{ji}$$

$$= \frac{2\Delta R_i \sum_{k=1}^{j} \cos\alpha_{ki}}{R_i \cdot (H_{zi}/J)}$$

where

$$H_{zi}/J = \sum_{k=1}^{N_i} \sin\alpha_{ki} - \frac{N_i R_i}{N_a R_a} \sum_{k=1}^{N_a} \sin\alpha_{ka}$$

and

b) the following mathematical relationships are at least largely satisfied for the outer conductor arrangement (9):

$$\frac{2\pi R_a}{l_{j+1,a}} - \frac{2\pi R_a}{l_{ja}} = \tan\alpha_{j+1,a} - \tan\alpha_{ja}$$

$$= \frac{2\Delta R_a \sum_{k=1}^{j} \cos\alpha_{ka}}{R_a(H_{za}/J)}$$

where

$$H_{za}/J = \frac{N_a R_a R_i^2}{N_i R_i R_a^2} \sum_{k=1}^{N_i} \sin\alpha_{ki} - \sum_{k=1}^{N_a} \sin\alpha_{ka} \, ,$$

where

| | |
|---|---|
| $l_{ji}$ and $l_{ja}$ | are the layer lengths of the individual conductors in the j-th conductor layer ($L_j$ or $L_j'$) of the inner conductor arrangement (8) and of the outer conductor arrangement (9), respectively, |
| $\alpha_{ji}$, and $\alpha_{ja}$ | are the twist angles of the individual conductors in the j-th conductor layer ($L_j$ or $L_j'$) of the inner conductor arrangement (8) and of the outer conductor arrangement (9) respectively; |
| $N_i$ and $N_a$ | are the number of conductor layers ($L_j$ or $L_j'$) in the inner conductor arrangement (8) and in the outer conductor arrangement (9), respectively, |
| $H_{zi}$ and $H_{za}$ | are the respective axial fields produced by the inner conductor arrangement (8) and the outer |

conductor arrangement (9) in each case in the interior of the cable core (7),

J        is the current loading in each conductor layer ($L_j$, $L_j'$),

$R_i$ and $R_a$    are the mean radii of the totality of all the conductor layers ($L_j$ or $L_j'$) in the inner conductor arrangement (8) and in the outer conductor arrangement (9), respectively and

$\Delta R_i$ add $\Delta R_a$    are the differences between the mean radii of adjacent conductor layers ($L_j$ or $L_j'$) in the inner conductor arrangement (8) and in the outer conductor arrangement (9), respectively.

2. Cable according to Claim 1, **characterized by** individual conductors with superconducting material.

3. Cable according to Claim 2, **characterized by** individual conductors (3) with high-$T_c$ superconductor material.

4. Cable according to Claim 3, **characterized in that** the high-$T_c$ superconductor material in the individual conductors (3) is in the form of at least one core in a matrix composed of silver or a silver alloy.

5. Cable according to Claim 1, **characterized by** individual conductors with normally conductive material.

6. Cable according to one of Claims 1 to 5, **characterized by** individual conductors (3) in the form of wire or ribbon.

7. Cable according to Claim 6, **characterized in that** the ratio of the width to the thickness of the individual conductors (3) which are in the form of ribbons is between 10:1 and 50:1.

8. Cable according to one of Claims 1 to 7, **characterized in that** a layer (5) composed of an insulating material or an electrically conductive material is arranged between adjacent conductor layers ($L_j$, $L_j'$).

**Revendications**

1. Câble pour courant alternatif avec au moins une âme qui comporte comme conducteur d'aller et conducteur de retour, deux systèmes concentriques de conducteurs formés de conducteurs individuels câblés, au moins un des systèmes de conducteurs étant formé de plusieurs couches des conducteurs individuels disposés en hélice autour d'un corps support, avec un angle de câblage prédéterminé, **caractérisé en ce que** les angles de câblage ($\alpha_j$, $\alpha_j'$) des conducteus individuels (3) dans les différentes couches de conducteurs ($L_j$, $L_j'$) sont choisis tels, que

a) pour le système de conducteurs (8) intérieur les relations mathématiques suivantes soient au moins largement remplies:

$$\frac{2\pi R_i}{l_{j+1,i}} - \frac{2\pi R_i}{l_{ji}} = \tan_{j+1,i} - \tan \alpha_{ji}$$

$$= \frac{2\Delta R_i \sum_{k=1}^{j} \cos \alpha_{ki}}{R_i \cdot (H_{zi} / J)}$$

avec

$$H_{zi} / J = \sum_{k=1}^{N_i} \sin \alpha_{ki} - \frac{N_i R_i}{N_a R_a} - \sum_{k=1}^{N_a} \sin \alpha_{ka}$$

et

b) pour le système de conducteurs (9) extérieur les relations mathématiques suivantes soient au moins largement remplies:

$$\frac{2\pi R_a}{l_{j+1,a}} - \frac{2\pi R_a}{l_{ja}} = \tan_{j+1,a} - \tan \alpha_{ja}$$

$$= \frac{2\Delta R_a \sum_{k=1}^{j} \cos \alpha_{ka}}{R_a \cdot (H_{za} / J)}$$

avec

$$H_{za} / J = \frac{N_a R_a R_i^2}{N_i R_i R_a^2} \sum_{k=1}^{N_i} \sin \alpha_{ki} - \sum_{k=1}^{Na} \sin \alpha_{ka}$$

dans lesquelles

| | |
|---|---|
| $l_{ji}$ et $l_{ja}$ | représentent les longueurs de tour de câble des conducteurs individuels dans la j[ième] couche de conducteurs ($L_j$ ou $L_j'$) du système de conducteurs (8) intérieur ou du système de conducteurs (9) extérieur, |
| $\alpha_{ji}$ et $\alpha_{ja}$ | les angles de câblage des conducteurs individuels dans la j[ième] couche de conducteurs ($L_j$ ou $L_j'$) du système de conducteurs (8) intérieur ou du système de conducteurs (9) extérieur, |
| $N_i$ et $N_a$ | le nombre des couches de conducteurs ($L_j$ ou $L_j'$) du système de conducteurs (8) intérieur et du système de conducteurs (9) extérieur, |
| $H_{zi}$ et $H_{za}$ | le champ axial engendré par le système de conducteurs (8) intérieur ou le système de conducteurs (9) extérieur dans l'âme du câble (7), |
| $J$ | la densité de courant dans chacune des couches de conducteurs ($L_j$, $L_j'$), |
| $R_i$ et $R_a$ | les rayons moyens de l'ensemble de toutes les couches de conducteurs ($L_j$ ou $L_j'$) du système de conducteurs (8) intérieur ou du système de conducteurs (9) extérieur, et |
| $\Delta R_i$ et $\Delta R_a$ | les différences entre les rayons moyens de couches de conducteurs ($L_j$ ou $L_j'$) voisines, du système de conducteurs (8) intérieur ou du système de conducteurs (9) extérieur. |

2. Câble selon la revendication 1, **caractérisé par** des conducteurs individuels en matériau supra-conducteur.

3. Câble selon la revendication 2, **caractérisé par** des conducteurs individuels (3) en matériau supra-conducteur à coefficient de température élevé.

4. Câble selon la revendication 3, **caractérisé en ce que** dans les conducteurs individuels (3), les matériaux supra-conducteurs à coefficient de température élevé sont présents au moins sous la forme d'un noyau dans une matrice d'argent ou d'un alliage à base d'argent.

5. Câble selon la revendication 1, **caractérisé par** des conducteurs individuels en matériau normalement conducteur.

6. Câble selon une des revendications 1 à 5, **caractérisé par** des conducteurs individuels (3) en forme de fil ou de bande.

7. Câble selon la revendication 6, **caractérisé en ce que** le rapport de la largeur à l'épaisseur des conducteurs individuels (3) est compris entre 10 : 1 et 50 :1.

8. Câble selon une des revendications 1 à 7, **caractérisé en ce qu'**une couche (5) d'un matériau isolant ou électriquement conducteur est disposée entre des couches de conducteurs ($L_j$, $L_j'$) consécutives.

FIG 1

EP 0 830 694 B1

$L_N$

$L_1$

$R$

$4$

$A$

$\alpha_N$

$\Delta R$

$3$

$5$

$2$

FIG. 2

$H_\varphi = H_z = 0$

$H_{\varphi i}$

$R_i$

$H_{za}$

$9 (L_j')$

$H_{zi} + H_{za}$

$8 (L_j)$

$L_1$

$R_a$

$13$

$L_1'$

$L_3'$

$L_5$

$11$

$12$

$7$

FIG 3

FIG 4

EP 0 830 694 B1